# FASCICULE DE BREVET EUROPEEN

(11) **EP 0 450 697 B1**
(45) Date de publication et mention de la délivrance du brevet: **31.01.1996**
(21) Numéro de dépôt: 91200647.5
(22) Date de dépôt: 22.03.1991
(51) Int. Cl.: F16K 11/074

(54) **Cartouche pour un robinet à plaques en matériau dur, avec des moyens pour retenir la plaque fixe en état de coaction**
Kartusche für ein Ventil mit Schieberplatten aus hartem Material mit Mitteln zum Halten der festen Platte in eingeklemmtem Zustand
Cartridge for a disc valve with discs of hard material and means for retaining the fixed disc in a pinched state

(30) Priorité: 02.04.1990 IT 6724390
(43) Date de publication de la demande: 09.10.1991
(73) Titulaire: GEVIPI A.G., FL-9490 Vaduz (LI)
(72) Inventeur: Knapp, Alfons, Dr., W-7950 Biberach/Riss (DE)
(74) Mandataire: Patrito, Pier Franco, Dr. Ing.

(56) Documents cités:
- WO-A-86/03568
- WO-A-86/07431
- WO-A-88/07151
- AU-B- 563 058
- DE-A- 2 349 131
- DE-A- 3 619 499
- DE-U- 7 634 701

## Description

La présente invention a pour objet une cartouche rechangeable pour un robinet, comprenant une cage de cartouche, un élément de support pour une plaque en matériau dur, une plaque en matériau dur ayant des passages pour l'eau, montée opérativement fixe dans ledit élément de support, et au moins une garniture d'étanchéité interposée entre ladite plaque fixe et ledit élément de support. Une cartouche du type considéré comprend, en outre, des moyens de manoeuvre et au moins une plaque mobile, opérativement reliée auxdits moyens de manoeuvre et destinée à se déplacer en contact avec la plaque fixe pour régler le débit d'eau à travers chaque passage de la plaque fixe.

Afin de pouvoir effectuer une fermeture et un réglage efficaces, les plaques fixe et mobile d'une cartouche de ce genre doivent être pressées l'une contre l'autre par une force d'adhésion commisurée à la pression de l'eau alimentée, parce que, dans le cas contraire, la pression de l'eau pourrait détacher entr'elles les plaques, ainsi empêchant la fermeture. En outre, une force appropriée doit être appliquée entre la plaque fixe et l'élément de support respectif, dans le but de comprimer la garniture ou les garnitures interposées entre ces parties, pour assurer l'étanchéité et aussi pour prévenir l'expulsion de la garniture, ou sa déformation, dans le cas où des surpressions se vérifieraient.

Dans la plupart des constructions connues, la plaque fixe est simplement appuyée sur l'élément de support respectif, constitué par un siège formé directement par la cage de la cartouche ou bien par un fond appliqué à la cage. La force d'adhésion qui doit être appliquée entre les plaques fixe et mobile, ainsi que la force de compression qui doit être appliquée à la garniture disposée entre la plaque fixe et l'élément de support relatif, sont obtenues en appliquant une force qui pousse l'élément de support vers la plaque mobile, ou vice-versa, et qui est donc active soit entre l'élément de support et la plaque fixe, ainsi comprimant la garniture, soit entre la plaque fixe et la plaque mobile, ainsi les retenant mutuellement adhérentes. Par conséquant, la force appliquée pour les deux buts indiqués est la même, et elle doit être toujours au moins égale à la plus grande des deux forces nécessaires pour les buts spécifiés.

Dans la plupart des cas, la force nécessaire pour comprimer la garniture d'étanchéité et pour la retenir sûrement dans sa position correcte est bien plus grande que la force nécessaire pour tenir en contact opératif les plaques fixe et mobile. De ce fait, dans tous ces cas la force appliquée entre les plaques est inutilement élevée pour son but. Une telle force excessive appliquée entre les plaques rend la manoeuvre du robinet moins fluide et donne lieu à des sollicitations mécaniques des parties qui ne seraient pas nécessaires

La demande internationale WO-A-88/07151 (même inventeur) a proposé de prévoir des moyens de maintien reliant la plaque fixe à l'élément de support respectif, la garniture étant comprimée entre ces parties, de sorte à maintenir entre tous ces éléments un état de coaction. Du fait de cette disposition, la compression appliquée à la garniture d'étanchéité de la plaque fixe est déterminée par les caractéristiques élastiques de la garniture et par les caractéristiques géométriques de la garniture elle-même, des moyens de maintien et des parties reliées, et cette compression est assûrée d'une façon permanente par les moyens de maintien comme une force de coaction interne au système comprenant la plaque fixe, l'organe de support respectif et les garnitures correspondantes, et indépendante des forces appliquées de l'extérieur à la plaque fixe et à l'organe de support respectif. A' ces dernières forces on peut donc assigner la seule fonction de produire l'adhésion opérative nécessaire entre les plaques fixe et mobile. Cette force d'adhésion entre les plaques peut être fixe ou variable, mais en tous cas elle peut être choisie en tenant compte seulement des exigences d'adhésion entre les plaques, sans avoir aucun égard aux exigences de compression et de maintien de la garniture de la plaque fixe.

Toutefois, la prévision de moyens de maintien agissant directement sur la plaque fixe pour la comprimer contre l'organe de support respectif implique d'appliquer à la plaque fixe des sollicitations concentrées. Du fait que les plaques sont faites d'un matériau céramique ou autre matériau dur et fragile, on doit craindre la rupture d'un pourcentage relativement élevé des plaques, soit-il lors du montage de la cartouche ou ensuite.

Le document AU-B-0,563,058 décrit une cartouche rechangeable pour un robinet, substantiellement suivant le préambule de la revendication 1. Toutefois suivant ce document la pression appliquée entre les plaques fixe et mobile est la même pression agissant sur la garniture d'étanchéité disposée entre le fond de la cartouche et le corps du robinet, avec les inconvénients déjà mentionnés.

Le but principal de la présente invention est de perfectionner d'une façon simple et rationnelle la mesure suggérée par la demande internationale indiquée, pour obtenir qu'à la plaque fixe puisse être appliquée une force suffisante pour la compression de la garniture d'étanchéité par rapport à l'organe de support, sans donner lieu à une concentration de sollicitation, et donc au danger de rupture, de la plaque fixe.

Un autre but de l'invention est de réaliser l'action indiquée par des moyens tels à autoriser aussi une adaptation facile de la cartouche pour son application à des robinets dans lesquels les moyens d'étanchéité hydraulique entre le corps du robinet et la cartouche sont de types différents.

Le but principal de l'invention est atteint, dans une cartouche rechangeable pour un robinet, comprenant une cage de cartouche, un élément de support pour une plaque en matériau dur, une plaque en matériau dur ayant des passages pour l'eau, montée opérativement fixe sur ledit élément de support, au moins une garniture d'étanchéité interposée entre ladite plaque fixe et ledit élément de support, et des moyens de maintien agissant entre ledit élément de support et ladite cage pour comprimer la garniture interposée entre la plaque fixe et l'élément de support respectif, ledit élément de support pour la plaque fixe étant constitué par un fond constructivement séparé de la cage de la cartouche et étant appliqué à cette cage, en ce que la cage de la cartouche forme un siège pour l'appui directe de la plaque fixe, et que lesdits moyens de maintien sont disposés entre ledit fond et la cage de la cartouche de telle façon que, quand ces moyens de maintien sont en activité, le fond pousse la plaque fixe, à travers la garniture interposée, contre le siège formé dans la cage de la cartouche.

Du fait de cette disposition, les concentrations d'effort qui suivent inévitablement à la présence de moyens de maintien sont appliquées à la cage et au fond de la cartouche, ces parties pouvant sans difficulté être projetées de sorte à supporter ces efforts, tandis que la plaque fixe fragile est comprimée entre une garniture souple et un siège disposé à cet effet dans la cage de la cartouche, lequel siège peut être facilement dessiné de sort à présenter pour la plaque fixe une surface d'appui uniforme et d'une extension suffisante pour éviter toute pression concentrée ou excessive. De cette facon on évite systématiquement tout danger de rupture de la plaque fixe. D'autre côté on dispose d'une grande liberté de projet des moyens de maintien, et il est facile de conformer ces moyens de maintien soit en vue de considérations d'économie, soit en même temps de sorte à rendre le plus facile possible le montage de la cartouche. Par exemple, à ces moyens de maintien on peut donner la forme de dents à déclenchement élastique, tels qu'elles, en soi, sont prévues suivant le document W0-A-86/07431.

De son côté, le fond doit présenter des moyens d'étanchéité agissant par rapport au corps du robinet, ou bien des parties capables de coopérer avec des moyens d'étanchéité présentés par le corps du robinet, et comme il est bien connu ces moyens d'étanchéité peuvent être différents dans les différentes constructions de robinets. Jusqu'ici ce fait imposait d'utiliser des cartouches différentes pour des robinets différents. Au contraire, du fait de l'application de l'invention, une même cartouche peut être adaptée pour l'application sur des robinets différents, simplement en appliquant à la cartouche un fond différent, approprié pour le robinet auquel la cartouche est destinée et, plus en particulier, pour les moyens d'étanchéité prévus dans le robinet pour agir entre le corps du robinet et la cartouche. Cela autorise une large unification constructive parmi des cartouches destinées à des robinets différents.

Ces caractéristiques et d'autres et les avantages de l'objet de l'invention ressortiront plus clairement de la suivante description de certains modes de réalisation, donnés à titre d'exemples non limitatifs et illustrés schématiquement dans le dessin annexé, dans lequel:
Fig. 1 montre une section de la partie inférieure d'une cartouche pour robinet mélangeur, comprenant une disposition de plaque fixe suivant un premier mode de réalisation de l'invention; et
Figs. 2 à 4 montrent de façon similaire des sections de la partie inférieure de cartouches pour robinets comportant des dispositions de la plaque fixe suivant des autres modes de réalisation de l'invention.

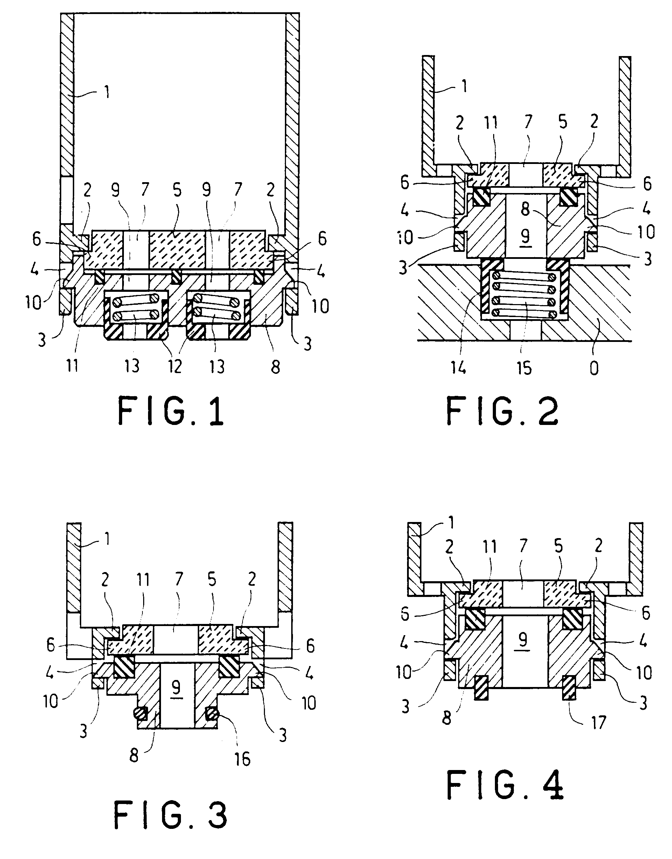

La cartouche pour robinet mélangeur montrée dans la figure 1 comporte une enveloppe, dite cage, 1, destinée à renfermer les mécanismes de la cartouche, qui n'ont pas été illustrés parce qu'ils n'ont aucun rapport avec l'application de la présente invention. En tous cas, un exemple desdits mécanismes peut être trouvé dans la demande internationale déjà indiquée, dont le contenu à ce propos est considéré introduit ici pour référence. La cage 1 forme à son extrémité inférieure (par rapport à la position montrée dans le dessin) un épaulement 2 définissant un siège, dans lequel est insérée par dessous une plaque 5 opérativement fixe, traversée par des passages 7 pour l'eau froide et chaude. La plaque fixe 5 comporte à sa périphérie une saillie 6 en forme de flasque, par lequel elle prend appui dans le siège formé par l'épaulement 2 de la cage de la cartouche. Le flasque 6 peut être continu ou bien être interrompu, particulièrement dans le but de former des moyens pour établir la position correcte d'agencement de la plaque fixe 5. Comme il est bien connu, dans le mécanisme de la cartouche, non représenté, est incluse une plaque mobile se déplaçant en contact avec la plaque fixe 5 sous l'action d'organes de manoeuvre, pour ouvrir ou fermer de différentes manières les passages 7, et donc contrôler le flux d'eau parcourant le robinet, soit en relation aux proportions de mélange entre eau chaude et froide, soit en relation au débit de l'eau mélangé. La cage 1 se prolonge, au-delà de l'épaulement 2, en constituant des prolongements 3 pourvus d'ouvertures 4.

Le fond pour la cartouche est constitué par un organe 8 constructivement séparé de la cage 1, et comporte des passages 9 pour l'eau, qui correspondent aux passages 7 de la plaque fixe 5. En outre le fond 8 est pourvu de dents 10 moyennant lesquelles il peut engager les ouvertures 4, ainsi établissant une liaison avec la cage 1. Une garniture élastique d'étanchéité 11 est interposée entre la plaque fixe 5 et le fond 8. Dans l'exemple illustré, cette garniture 11 est insérée en partie en un siège formé à cet effet dans le fond 8. Le fond 8 est conformé et dimensionné de sorte que, quand il est relié par les dents 10 à la cage 1, la garniture élastique 11 est comprimée d'une façon appropriée entre le fond 8 et la plaque fixe 5, laquelle à son tour est appuyée par le flasque périphérique 6 dans le siège offert par l'épaulement 2 de la cage 1 de la cartouche. Comme on le comprend, il n'y a aucune difficulté pour conformer l'épaulement 2 de la cage 1 et le flasque périphérique 6 de la plaque fixe 5 de sorte que cette dernière trouve un appui étendu et uniforme dans le siège de la cage 1, ainsi évitant toute concentration de sollicitation, tandis que du côté opposé la plaque fixe 1 est pressée par la garniture élastique 11 qui, par sa même nature, ne donne pas lieu à des concentrations d'effort. Il n'existe donc aucun danger de rupture ou de brisure de la plaque fixe 5.

D'autre côté les dents 10, en coopérant avec les ouvertures 4 des prolongements 3 de la cage 1, donnent certainement lieu à des concentrations d'effort, mais soit le fond 8, soit la cage 1 peuvent être facilement fabriqués en des formes et par des matériaux tels à pouvoir soutenir ces efforts sans dommage. Dans la plupart des cas, lesdits organes peuvent être réalisés en matière plastique.

Plus en particulier, on peut prévoir que les prolongements 3 de la cage 1, dans lesquels sont formées les ouvertures 4, soient élastiquement déformables, ce qui rend très aisée l'opération de relier le fond 8. De cette façon il est possible de réaliser les parties par une construction économique et, en même temps, de rendre aisée et donc économique l'opération de montage par déclenchement élastique.

Dans la forme représentée dans la figure 1, le fond 8 comporte sur sa face inférieure des sièges dans lesquels sont introduites des garnitures en manchon 12 chargées par des ressorts 13, lesquelles ont la fonction d'établir l'étanchéité entre le fond 8, et donc la cartouche, et le fond du corps d'un robinet, dans lequel ouvrent des canalisations d'arrivée de l'eau.

Dans la forme de réalisation suivant la figure 2, les parties opérativement correspondant à des parties de la forme de réalisation suivant la figure 1 sont indiquées par les mêmes chiffres de référence, et elles ne seront pas décrites plus en détail. La forme de réalisation suivant la figure 2 est différente de la précédente dans les proportions des parties et, en outre, en ce qu'une garniture en manchon 14, chargée par un ressort 15, est insérée dans un siège formé dans le fond 0 du corps d'un robinet, pour coopérer avec le fond de la cartouche qui, dans ce cas, se termine inférieurement par une surface plate.

Aussi dans la forme de réalisation suivant la figure 3, les parties opérativement correspondant à des parties des formes de réalisation suivant les figures 1 et 2 sont indiquées par les mêmes chiffres de référence, et elles ne seront pas décrites plus en détail. La forme de réalisation suivant la figure 3 est différente de la précédente en ce que le fond 8 est pourvu d'une partie en col avec un siège annulaire dans lequel est insérée une garniture annulaire 16 destinée à travailler dans un siège creux cylindrique du fond du corps du robinet, pour y exercer une action de piston hydraulique, déjà connue en soi par le brevet européen No. 0.205.486 de la même Titulaire.

Enfin, aussi dans la forme de réalisation suivant la figure 4 les parties opérativement correspondant à des parties des formes de réalisation suivant les figures 1, 2 et 3 sont indiquées par les mêmes chiffres de référence, et elles ne seront pas décrites plus en détail. La forme de réalisation suivant la figure 4 est différente de la précédente en ce qu'une garniture élastique 17 est insérée dans un siège annulaire formée dans le fond 8, et elle est destinée è coopérer frontalement d'une façon étanche avec la surface plate du fond d'un corps de robinet.

Comme on peut le remarquer, les modes de réalisations suivantes les figures 1 à 4 diffèrent entr'eux en substance seulement par la forme et la nature des moyens prévus pour établir l'étanchéité entre le fond 8, et par conséquent la cartouche, et le fond du corps du robinet qui doit recevoir la cartouche. Il est donc possible de prédisposer une cartouche de telle façon qu'elle peut recevoir, au choix, un fond pourvu de moyens d'étanchéité suivant la figure 1, suivant la figure 2, suivant la figure 3 ou bien suivant la figure 4, de sorte à s'adapter de la façon la plus simple aux exigences de robinets de types différents. Une telle cartouche, équipée (tout au moins lors de sa fabrication) de nombre de fonds différents, peut être adaptée lors du montage de la plaque fixe, pour la destiner à un type spécifique de robinet, choisi parmi plusieurs types.

La connexion moyennant des moyens de maintien constitués par des dents à déclenchement élastique a été décrite à titre d'exemple en supposant que les dents 10 soient formées sur le fond 8 et qu'elles engagent des ouvertures 4 formées dans la cage 1 de la cartouche, mais bien entendu l'on pourrait aussi prévoir des dents formées sur la cage de la cartouche, qui engagent des creux formés dans le fond. En outre, la connexion moyennant des dents à déclenchement élastique n'est qu'un exemple d'un mode de réalisation, particulièrement économique et pratique, des moyens de maintien destinés à réaliser la compression de la garniture 11 d'étanchéité de la plaque fixe 5. Toutefois nombre de moyens de connexion différents peuvent être utilisés dans ce but, y inclus des connexions par vis, des couplages forcés, des soudures et des collages. En tous cas, le fait d'effectuer la connexion entre la cage de la cartouche et le fond, sans intéresser directement la plaque fixe, dont le matériau est fragile et n'autorise pas des collages ou des soudures, donne la solution convenable au problème d'obtenir la compression exigée pour la garniture interposée entre la plaque fixe et le fond d'une cartouche pour robinet. En outre l'invention, bien qu'elle montre les plus grands avantages lors qu'elle est appliquée à des robinets mélangeurs, peut trouver application avantageuse aussi dans les robinets de distribution ou dans les simples robinets à une voie.

Bien entendu, dans les cas où le fond 8 comporte des moyens pour coopérer avec des garnitures destinées à agir par rapport au corps du robinet, ces moyens peuvent être en nombre d'un ou plusieurs, en accord avec le nombre de voies d'eau pour lesquelles on doit établir l'étanchéité.

Lors que l'on croit à propos de protéger la plaque fixe d'une façon particulièrement soignée, une garniture en matériau souple peut être interposée entre le flasque 6 de la plaque fixe 5 et le siège formée par l'épaulement 2 de la cage 1, ou bien la surface de cet épaulement peut être conditionnée de sorte à présenter elle-même une certaine souplesse élastique.

Bien entendu, des modifications peuvent être portées à ce qu'on a décrit et représenté à titre d'exemples, dans le cadre des revendications suivantes.

## Revendications

1. Cartouche rechangeable pour un robinet, comprenant une cage de cartouche (1), un élément (8) de support pour une plaque (5) en matériau dur, une plaque en matériau dur (5) ayant des passages (7) pour l'eau, montée opérativement fixe sur ledit élément de support (8), au moins une garniture d'étanchéité (11) interposée entre ladite plaque fixe (5) et ledit élément de support (8), et des moyens de maintien (3,4,10) agissant entre ledit élément de support (8) et ladite cage (1) pour comprimer la garniture (11) interposée entre la plaque fixe (5) et l'élément de support (8) respectif, ledit élément de support (8) pour la plaque fixe étant constitué par un fond constructivement séparé de la cage (1) de la cartouche et étant appliqué à cette cage, caractérisée en ce que la cage (1) de la cartouche forme un siège (2) pour l'appui directe de la plaque fixe (5), et que lesdits moyens de maintien (3,4,10) sont disposés entre ledit fond (8) et la cage (1) de la cartouche de telle façon que, quand ces moyens de maintien sont en activité, le fond (8) pousse la plaque fixe (5), à travers la garniture interposée (11), contre le siège (2) formé dans la cage (1) de la cartouche.

2. Cartouche pour robinet suivant la revendication 1, caractérisée en ce que ledit siège pour la plaque fixe (5), présentée par la cage (1) de la cartouche, est déterminée par un épaulement (2) de la cage, et que la plaque fixe (5) a une saillie périphérique (6) en forme de flasque pour engager ledit siège.

3. Cartouche pour robinet suivant la revendication 1, caractérisée en ce que ledit fond (8) a un siège creux pour recevoir ladite garniture (11) interposée.

4. Cartouche pour robinet suivant la revendication 1, caractérisée en ce que lesdits moyens de maintien sont constitués par des éléments (3,4,10) à déclenchement élastique.

5. Cartouche pour robinet suivant la revendication 4, caractérisée en ce que lesdits moyens de maintien sont constitués par des organes de retenue (10) formés dans le fond (8) et par des organes de retenue (4) formés en des prolongements (3) de la cage (1) de la cartouche.

6. Cartouche pour robinet suivant la revendication 5, caractérisée en ce que lesdits prolongements (3) de la cage (1) de la cartouche comportant les organes de retenue (4) sont élastiquement déformables.

7. Cartouche pour robinet suivant la revendication 1, caractérisée en ce que lesdits moyens de maintien sont constitués par des moyens à vis, par un couplage forcé, par une soudure ou par un collage.

8. Cartouche pour robinet suivant la revendication 1, caractérisée en ce que ledit fond (8) a une surface plate pour coopérer avec au moins une garniture en manchon (14) avec ressort (15), insérée dans un siège du fond (0) du corps d'un robinet.

9. Cartouche pour robinet suivant la revendication 1, caractérisée en ce que ledit fond (8) comporte au moins un siège pour recevoir au moins une garniture (12,16,17) destinée à coopérer avec le corps d'un robinet.

10. Cartouche pour robinet suivant la revendication 1, caractérisée en ce que ledit fond (8) comporte au moins un siège frontal creux pour recevoir au moins une garniture (17) destinée à coopérer frontalement avec le fond du corps du robinet.

11. Cartouche pour robinet suivant la revendication 1, caractérisée en ce que ledit fond (8) comporte au moins une partie en col avec siège périphérique pour recevoir au moins une garniture annulaire (16) destinée à travailler comme un piston dans un siège cylindrique creusé dans le fond du corps d'un robinet.

12. Cartouche pour robinet suivant la revendication 1, caractérisée en ce que ledit fond (8) comporte au moins un siège pour au moins une garniture en manchon (12) avec ressort (13) destinée à coopérer avec le fond du corps d'un robinet.

13. Cartouche pour robinet suivant la revendication 1, caractérisée en ce qu'elle est équipée avec nombre de fonds (8) différents, destinés à être employés l'un ou l'autre pour adapter la cartouche à des types différents de robinets.

## Patentansprüche

1. Ausweschselbare Patrone für einen Wasserhahn, mit einem Patronengehäuse (1), einem Tragelement (8) für eine Platte (5) aus hartem Werkstoff, einer Platte (5) aus hartem Werkstoff, die Wasserdurchlässe (7) aufweist und im Tragelement (8) wirkend fest eingebaut ist, mit wenigstens einer zwischen der festen Platte (5) und dem Tragelement (8) angeordneten Dichtung (11) und mit Haltemitteln (3,4,10), die zwischen dem Tragelement (8) und dem Gehäuse (1) so wirken, dass die zwischen der festen Platte (5) und dem entsprechenden Tragelement (8) angeordnete Dichtung (11) zusammengepresst wird, wobei das Tragelement (8) für die feste Platte aus einer baulich vom Patronengehäuse (1) getrennten und an diesem Gehäuse angebrachten Bodenscheibe besteht, dadurch gekennzeichnet, dass das Patronengehäuse (1) eine Aufnahme (2) zur direkten Auflage der festen Platte (5) bildet und dass die Haltemittel (3,4,10) zwischen der Bodenscheibe (8) und dem Patronengehäuse (1) so angeordnet sind, dass bei in Betrieb gesetzten Haltemitteln die Bodenscheibe (8) die feste Platte (5) über die dazwischenliegende Dichtung (11) gegen die vom Patronengehäuse (1) gebildeten Aufnahme (2) drückt.

2. Wasserhahnpatrone nach Anspruch 1, dadurch gekennzeichnet, dass die im Patronengehäuse (1) für die feste Platte (5) vorgesehene Aufnahme durch einem Ansatz (2) des Gehäuses gebildet ist und dass die feste Platte (5) eine flanschförmige Umfangswulst (6) zum Eingriff mit der Aufnahme aufweist.

3. Wasserhahnpatrone nach Anspruch 1, dadurch gekennzeichnet, dass in der Bodenscheibe (8) ein Sitz zur Aufnahme der zwischenliegenden Dichtung (11) ausgespart ist.

4. Wasserhahnpatrone nach Anspruch 1, dadurch gekennzeichnet, dass die Haltemittel aus federnd einrastenden Elementen (3,4,10) bestehen.

5. Wasserhahnpatrone nach Anspruch 4, dadurch gekennzeichnet, dass die Haltemittel aus in der Bodenscheibe (8) ausgebildeten Halteelementen (10) und aus in Verlängerungen (3) des Patronengehäuses (1) ausgebildeten Halteelementen (4) bestehen.

6. Wasserhahnpatrone nach Anspruch 5, dadurch gekennzeichnet, dass die die Halteelemente (4) aufweisenden Verlängerungen (3) des Patronengehäuses (1) elastisch verformbar sind.

7. Wasserhahnpatrone nach Anspruch 1, dadurch gekennzeichnet, dass die Haltemittel aus Schraubmitteln, aus einer Presspassung, aus einer Verklebung oder aus einer Schweissnaht bestehen.

8. Wasserhahnpatrone nach Anspruch 1, dadurch gekennzeichnet, dass die Bodenscheibe (8) eine ebene Oberfläche aufweist, womit sie mit wenigstens einer in einer Aufnahme des Bodens (0) eines Wasserhahnkörpers sitzenden Manschette (14) samt Feder (15) in Wirkverbindung steht.

9. Wasserhahnpatrone nach Anspruch 1, dadurch gekennzeichnet, dass die Bodenscheibe (8) wenigstens einen Sitz zur Aufnahme von wenigstens einer Dichtung (12,16,17) aufweist, die dazu bestimmt ist, mit einem Wasserhahnkörper in Wirkverbindung zu stehen.

10. Wasserhahnpatrone nach Anspruch 1, dadurch gekennzeichnet, dass in der Bodenscheibe (8) wenigstens ein stirnseitiger Sitz zur Aufnahme von wenigstens einer Dichtung (17) ausgespart ist, die dazu bestimmt ist, stirnseitig mit dem Boden eines Wasserhahnkörpers in Wirkverbindung zu stehen.

11. Wasserhahnpatrone nach Anspruch 1, dadurch gekennzeichnet, dass die Bodenscheibe (8) wenigstens einen halsförmigen Teil mit Umfangssitz zur Aufnahme von wenigstens einem Dichtungsring (16) aufweist, der dazu bestimmt ist, in einer im Boden eines Wasserhahnkörpers ausgesparten zylinderförmigen Aufnahme kolbenartig zu arbeiten.

12. Wasserhahnpatrone nach Anspruch 1, dadurch gekennzeichnet, dass die Bodenscheibe (8) wenigstens eine Aufnahme für wenigstens eine Manschette (12) samt Feder (13) aufweist, die dazu bestimmt ist, mit dem Boden eines Wasserhahnkörpers in Wirkverbindung zu stehen.

13. Wasserhahnpatrone nach Anspruch 1, dadurch gekennzeichnet, dass sie mit mehreren unterschiedlichen Bodenscheiben (8) ausgerüstet ist, die dazu bestimmt sind, abwechselnd benutzt zu werden, um die Patrone an unterschiedliche Wasserhahnarten anzupassen.

## Claims

1. A replaceable cartridge for a valve, comprising a cage (1), a supporting member (8) for a hard material plate (5), a hard material plate (5) having water passages (7), mounted, operatively stationary, in said supporting member (8), at least one sealing gasket (11) interposed between said fixed plate (5) and said supporting member (8), and retainment means (3,4,10) acting between said supporting member (8) and said cage (1) in order to compress the sealing gasket (11) interposed between the fixed plate (5) and the respective supporting member (8), said supporting member (8) for the fixed plate being embodied by a bottom constructively separate from the cartridge cage (1) and being applied to said cage, characterized in that the cartridge cage (1) has a seat (2) for direct rest of the fixed plate (5), and that said retainment means (3,4,10) are arranged between said bottom (8) and the cartridge cage (1) in such a manner that, when these retainment means are in activity, the bottom (8) pushes the fixed plate (5), through the interposed gasket (11), against the seat (2) formed in the cartridge cage (1).

2. A valve cartridge as set forth in Claim 1, characterized in that said seat for the fixed plate (5), formed in the cartridge cage (1), is determined by a shoulder (2) of the cage, and that the fixed plate (5) has a peripheral projection (6) having the shape of a flange, intended for engaging said seat.

3. A valve cartridge as set forth in Claim 1, characterized in that said bottom (8) has a hollowed seat housing said interposed gasket (11).

4. A valve cartridge as set forth in Claim 1, characterized in that said retainment means are formed by members (3,4,10) with elastic release.

5. A valve cartridge as set forth in Claim 4, characterized in that said retainment means are formed by retainment members (10) formed on the bottom (8) and retainment members (4) formed on projections (3) of the cartridge cage (1).

6. A valve cartridge as set forth in Claim 5, characterized in that said projections (3) of the cartridge cage (1) having the retainment members (4) are elastically deformable.

7. A valve cartridge as set forth in Claim 1, characterized in that said retainment means are formed by screw means, by forced couplings, by a soldering or by a sticking.

8. A valve cartridge as set forth in Claim 1, characterized in that said bottom (8) has a plane surface intended to cooperate with at least one sleeve packing (14) with spring (15), mounted in a seat of the lower wall (0) of a valve body.

9. A valve cartridge as set forth in Claim 1, characterized in that said bottom (8) has at least one seat in order to house at least one packing (12,16,17) intended to cooperate with the body of a valve.

10. A valve cartridge as set forth in Claim 1, characterized in that said bottom (8) has at least one hollowed front seat in order to house at least one packing (17) intended to frontally cooperate with the lower wall of a valve body.

11. A valve cartridge as set forth in Claim 1, characterized in that said bottom (8) has at least one neck portion with a peripheral seat in order to house at least one annular packing (16) intended to act like a piston in a cylindrical seat hollowed in the lower wall of a valve body.

12. A valve cartridge as set forth in Claim 1, characterized in that said bottom (8) has at least one seat for at least one sleeve packing (12) with spring (13), intended to cooperate with the lower wall of a valve body.

13. A valve cartridge as set forth in Claim 1, characterized in that it is equipped with several different bottoms (8) intended to be used, the one or the other, in order to adapt the cartridge for valves of different types.
